# EUROPEAN PATENT APPLICATION

(11) **EP 2 450 661 A1**
(43) Date of publication of application: **09.05.2012**
(21) Application number: 10794055.3
(22) Date of filing: 24.06.2010
(51) Int. Cl.: G01B 7/30, F16C 3/02, F16C 19/00, F16C 41/00, G01D 5/245

(54) **ROTATION ANGLE DETECTING DEVICE FOR CAR DRIVING MOTOR, AND BEARING EQUIPPED WITH THE ROTATION ANGLE DETECTING DEVICE**

(30) Priority: 30.06.2009 JP 2009155150; 18.05.2010 JP 2010114433
(71) Applicant: NTN Corporation, Osaka-shi, Osaka 550-0003 (JP)
(72) Inventor: TAKAHASHI, Toru, Shizuoka 438-0037 (JP); UENO, Shintarou, Shizuoka 438-0037 (JP)
(74) Representative: Baumgärtel, Gunnar
(86) International application number: PCT/JP2010/060735
(87) International publication number: WO 2011/001886

(57) **Abstract**

Provided is a rotation angle detection device for an automotive vehicle drive motor. The device includes a magnetic encoder including magnetic tracks with different numbers of magnetic poles. The magnetic tracks form coaxial rings. The device also includes magnetic sensors operable to sense the magnetic fields of the magnetic tracks. The magnetic sensors obtain information on a location within a magnetic pole of the magnetic tracks and generate magnetic field signals indicative of respective phases. The device further includes a phase difference determination unit that determines a difference between the respective phases of the magnetic field signals, an angle computation unit that computes an absolute angle of the magnetic encoder, based on the determined difference, and a signal output unit that outputs the computed absolute angle. The magnetic encoder is associated with an output shaft of the drive motor or with a bearing assembly equipped to the drive motor.

## Description

### CROSS REFERENCE TO THE RELATED APPLICATIONS

This application is based on and claims the Convention priority to Japanese Patent applications No. 2009-155150, filed June 30, 2009, and No. 2010-114433, filed May 18, 2010, the entire disclosures of which are herein incorporated by reference as a part of this application.

### BACKGROUND OF THE INVENTION

### (Field of the Invention)

The present invention relates to a rotation angle detection device used to detect a rotor angle necessary for control of a motor such as a brush-less motor. In particular, the present invention relates to a rotation angle detection device used to detect a rotor angle of an automotive vehicle drive motor for an electric automotive vehicle or a hybrid automotive vehicle. The present invention also relates to a bearing assembly equipped with such a rotation angle detection device integrally incorporated thereto.

### (Description of Related Art)

For a rotation angle detection device used to detect a rotation angle in various machines, a rotation angle detection device has been proposed which includes a plurality of rows of magnetic encoders magnetized with different numbers of magnetic poles and includes sensors that are each able to detect the phase within a magnetic pole pair, for determination of an absolute angle based on the difference between the phases of neighboring magnetic encoders. Also, a bearing assembly equipped with this type of rotation angle detection device mounted to a bearing has been proposed as well (see, for example, the Patent Document 1 listed below).

As another type of a rotation angle detection device, a rotation detection device which includes sensors molded with thermoplastic elastomers or materials having rubber elasticity covering the sensors has been proposed. Also, a bearing assembly equipped with this type of rotation angle detection device mounted to a bearing has been proposed. Furthermore, a method of assembling a rotation angle detection device with improved waterproof property and improved seal, that includes sensor components protected from damages that may be caused by vibrations or thermal expansion has been proposed as well (see, for example, the Patent Document 2 listed below).

Neither the Patent Document 1 nor Patent Document 2 discloses a rotation angle detection device incorporated into an electric automotive vehicle or a hybrid automotive vehicle. To control a drive motor for an electric automotive vehicle and/or a hybrid automotive vehicle, a rotation angle of a rotor of the motor needs to be accurately determined. Conventionally, a variety of rotation angle detection devices that detect a rotation angle of a rotor in a motor by using a resolver are known (see, for example, the Patent Documents 3 to 6 listed below).

The Patent Document 3, for example, discloses a configuration in which a resolver is arranged outside a barrier wall to avoid electromagnetic noise from an automotive vehicle drive motor. The Patent Document 4 discloses a structure for fixing a resolver in a transmission unit of a hybrid automotive vehicle. The Patent Document 5 discloses the application of a resolver formed by a printed circuit board in a rotation angle detection device for a hybrid automotive vehicle. This document also discloses problems associated with a variable reluctance resolver (VR resolver) that uses laminated steel plates and discusses the effects of the rotation runouts and how difficult it is to accomplish reduction in size. The Patent Document 6 discloses the issues that arise when a resolver formed by a printed circuit board is used as a rotation angle detection device, in an environment where it is subject to coolant (lubricant) oil. The issues are that resistance to the shear stress imposed by oil during high-speed rotations and to the chemical effect of substances such as sulfur contained in additives for oil is necessary.
[Patent Document 1] JP Laid-open Patent Publication No. 2008-233069
[Patent Document 2] JP Patent Application No. 2007-223481
[Patent Document 3] JP Laid-open Patent Publication No. 2001-078393
[Patent Document 4] JP Laid-open Patent Publication No. 2007-336714
[Patent Document 5] JP Laid-open Patent Publication No. 2008-197046
[Patent Document 6] JP Laid-open Patent Publication No. 2008-215835

### SUMMARY OF THE INVENTION

As is clear from the earlier discussion, highly accurate information on a rotor angle is necessary to control an automotive vehicle drive motor, and a resolver is widely used for a rotation angle detection device to accomplish such purposes.

Nevertheless, there is a strong demand for smaller size and further weight reduction of automotive vehicle components, in order to achieve improved fuel consumption. This leads to the necessity to provide a rotation angle detection device that is as compact as possible to achieve smaller size and weight reduction. This is, however, difficult to address with the conventional resolvers.

A VR resolver widely used for an automotive vehicle drive motor that performs detection with coils is formed by laminated magnetic steel plates, thereby leading to increased weights and sizes. Furthermore, in order to perform reliably accurate detection, high precision is required in the manufacturing of the rotor and stator of a resolver, and the relative positioning of the rotor and the stator should be precisely maintained during an assembling step.

On the other hand, as is described in the Patent Documents 5 and 6, the environment where a rotation angle detection device is incorporated in an automotive vehicle drive motor is so severe that the rotation angle detection device is required to have good resistance to such an environment. The detector portion of a resolver, which is formed by laminated steel plates and coils, is highly resistant to such a severe environment as mentioned above. However, a controller needs to be provided with a separate processing circuitry (RD converter) to compute or calculate a rotation angle from the resolver signals, thereby disadvantageously leading to more space occupation and increased parts cost. With a resolver that uses a printed circuit board such as those disclosed in the Patent Documents 5 and 6, it is easier to achieve weight reduction and space savings than with a configuration that uses laminated steel plates and coils. However, this type of resolver also needs an additional processing circuitry such as the RD converter.

An object of the present invention is to provide a rotation angle detection device for an automotive vehicle drive motor, that is compact, lightweight, simple to mount and can considerably reduce the number of external parts and electric circuits necessary for operations. Another object of the present invention is to provide a bearing assembly equipped with such a rotation angle detection device.

The present invention provides a rotation angle detection device for an automotive vehicle drive motor, where the device includes a magnetic encoder including a plurality of respective magnetic tracks with different numbers of magnetic poles, with the magnetic tracks forming coaxial rings. Such a rotation angle detection device further includes a plurality of respective magnetic sensors operable to sense the magnetic fields of the respective magnetic tracks, with the respective magnetic sensors being configured to obtain information on a location within a magnetic pole of the respective magnetic tracks from the sensed magnetic fields. Such a rotation angle detection device further includes a phase difference determination unit configured to determine a difference between the respective phases of the respective magnetic field signals generated by the respective magnetic sensors, an angle computation unit configured to compute an absolute angle of the magnetic encoder, based on the determined difference; and a signal output unit configured to output the computed absolute angle. The magnetic encoder is associated with a rotational shaft of a rotor of the automotive vehicle drive motor or with a member configured to rotate integrally with the rotational shaft, for determination of a rotor angle of the automotive vehicle drive motor. The magnetic encoder may include, for example, two or three rows of magnetic tracks. The respective magnetic tracks may be designed to have a repetition of their phase relationship, during a complete rotation.

A rotation of a magnetic encoder that includes a plurality of magnetic tracks with different numbers of magnetic poles, for example, a rotation of a magnetic encoder that includes a first magnetic track with 12 magnetic pole pairs and a second magnetic tracks with 13 magnetic pole pairs will displace, in terms of the phase, two signals from the corresponding two magnetic sensors that sense the magnetic fields of the respective magnetic tracks, with the phase displacement corresponding to one magnetic pole pair. The phase difference determination unit determines this phase difference. The angle computation unit computes, based on the determined phase difference, an absolute angle as measured within the range of one rotation. The signal output unit outputs the computed absolute angle, as a rotation angle of a rotor in a motor, to an external motor controller. Since the respective magnetic sensors are configured to obtain information on a location within a magnetic pole of the respective magnetic tracks, an absolute angle can be detected highly accurately.

With a configuration of including magnetic encoder and magnetic sensors, a rotation angle detection device having reduced size and weight can be provided. Hence, in the case of an automotive vehicle drive motor defining a magnetic gap radially outwardly of the motor, such a rotation angle detection device can be arranged radially inwardly of the rotor of the motor. In this way, the incorporation of the rotation angle detection device can be realized in a compact fashion, without undesirably increasing the axial dimension of the automotive vehicle drive motor. Such a rotation angle detection device arranged radially inwardly of the rotor of a motor is less subject to the effects of electromagnetic noise that may be generated by leakage magnetic field of the automotive vehicle drive motor, thereby allowing for stable detection of a rotation angle.

Such a configuration will result in a rotation angle detection device that is compact, lightweight, simple to mount and can considerably reduce the number of external parts and electric circuits necessary for operations, even when the device is used for an automotive vehicle drive motor.

In the present invention, the respective magnetic sensors may include a magnetic sensor including a plurality of magnetic sensor elements that are operable to produce respective outputs and are aligned in a direction in which the magnetic poles of one of the magnetic tracks are arranged. The magnetic sensor may be configured to compute the respective outputs from the magnetic sensor elements and produce two signals representing, respectively, sine phase and cosine phase, for determination of a location within a magnetic pole.

The magnetic sensors that use such a differential detection scheme in which information on magnetic phases is obtained from the magnetic field strength distributing within a magnetic pole of the magnetic tracks are less subject to the effects of noise such as leakage magnetic field, thereby sensing the signals from the magnetic tracks precisely and allowing for highly accurate detection of an absolute angle.

In the present invention, the magnetic sensors, the phase difference determination unit, the angle computation unit, and the signal output unit may be integrated on an integrated circuit. Integration into an integrated circuit will result in improved reliability, size reduction, enhanced robustness, and reduction of the manufacturing cost in the case of mass-production.

Preferably, in the present invention, the rotation angle detection device further includes a sensor casing as well as a magnetic plate having a surface area at least larger than the magnetic sensors, with the sensor casing accommodating the magnetic sensors and the magnetic plate being arranged behind the magnetic sensors. In this configuration, the penetration of leakage magnetic field from the drive motor into the magnetic sensors is blocked by the magnetic plate.

In the present invention, the rotation angle detection device may further include a magnetic spacer, with the magnetic tracks including neighboring magnetic tracks and the spacer being interposed between the neighboring magnetic tracks. In such a configuration, the neighboring tracks are separated from each other by a spacer. This results in reduced interference between the respective magnetic patterns of the corresponding magnetic tracks, thus eliminating the need to widen a space between the magnetic tracks. Hence, it also reduces detection errors that may be caused by interferences of magnetic fields, thereby allowing for highly accurate detection of an absolute angle.

In the present invention, the rotation angle detection device may further include a plate-shaped core metal, which is magnetic, having a surface on which the magnetic poles are commonly arranged side by side, with the space including a bent portion of the core metal. In such a configuration, the magnetic poles of the respective magnetic tracks are placed on the surface of a common plate, thereby achieving a simplified construction.

In the present invention, each of the magnetic tracks may include one of a rubber magnet and a plastic magnet. A rotation angle detection device for integration into an automotive vehicle drive motor is required to have good resistance to the environment. Magnetic tracks, each including a rubber magnet and/or a plastic magnet, will such obtain good resistance to high temperatures and to oils.

In the present invention, each of the magnetic tracks may include a visible indication indicating a specific location in the arrangement of the magnetic poles of the magnetic tracks. The specific location is, for example, a starting position. The indication may be, for example, a symbol. The indication may also be, for example, a cutout or a marking. Such a configuration allows for checking a proper phase positioning when assembling a magnetic encoder to a rotor of a drive motor.

In the present invention, the signal output unit may include a signal cable of a shielded configuration. Such a configuration will provide noise immunity such as against the switching noise of a drive motor, thereby improving the reliability in signal transmissions.

In the present invention, the magnetic encoder may be associated with an inner ring of a rolling contact bearing assembly for supporting the rotational shaft of the rotor, with the magnetic sensors being associated with an outer ring of the rolling contact bearing assembly. Such a configuration in which the magnetic encoder and the magnetic sensors are associated with a rolling contact bearing assembly allows for a convenient installation of a rotation angle detection device to an automotive vehicle drive motor.

In the present invention, the automotive vehicle drive motor may include an automotive vehicle drive motor of an in-wheel type. An automotive vehicle drive motor of an in-wheel type can also enjoy an advantage of the present invention - that is, of providing an automotive vehicle drive motor that is compact, lightweight, simple to mount and can considerably reduce the number of external parts and electric circuits necessary for operations. Note that the phrase "automotive vehicle drive motor of an in-wheel type" used herein is not limited to a configuration in which a motor is incorporated entirely inside a wheel, but also includes a configuration in which an assembly of parts containing a motor is partially incorporated inside a wheel. For example, when in an assembly of parts containing a motor, a reduction mechanism and a wheel support bearing assembly the wheel support bearing assembly is the one located inside a wheel, the motor included in that assembly will be referred to as an automotive vehicle drive motor of an in-wheel type.

The present invention provides a bearing assembly equipped with a rotation angle detection device for an automotive vehicle drive motor, with the bearing assembly being operable to rotatably support a rotor of the automotive vehicle drive motor and with the bearing assembly including a rotation angle detection device that has one of the above discussed configurations according to the invention integrally mounted thereto.

This results in an automotive vehicle drive motor which is not only provided with an ability to detect an absolute angle but also achieves reduced number of the motor parts, reduced number of steps necessary for assembling, and reduction in size. Furthermore, the need to adjust a sensor gap during the assembling step is eliminated. This leads to further reduction in size.

In the present invention, the bearing assembly may include a rotational inner ring, with the inner ring including a visible indication indicating a starting position of the magnetic encoder. Such a configuration allows for mechanically matching the phases more or less precisely, when incorporating a bearing assembly equipped with a rotation angle detection device into a drive motor.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 shows a cross sectional view of an automotive vehicle drive motor for a hybrid automotive vehicle, with the motor being provided with a bearing assembly equipped with a rotation angle detection device according to the first embodiment of the present invention;
Fig. 2 shows an enlarged cross sectional view of the bearing assembly of Fig. 1;
Fig. 3 shows a schematic configuration of a rotation angle detection device according to the first embodiment of the present invention, in the bearing assembly of Fig. 1;
Fig. 4 shows a fragmentary enlarged cross sectional view of a magnetic encoder in the rotation angle detection device of Fig. 3;
Fig. 5 is a diagram used for explanation purposes, showing the first exemplary configuration of magnetic sensors in the rotation angle detection device of Fig. 3;
Fig. 6 is a drawing used for explanation of the second exemplary configuration of magnetic sensors, in which diagram A shows a waveform illustrating the magnetic field strength within the range of a magnetic pole in a magnetic track, diagram B is a block diagram illustrating the arrangement of the magnetic sensors, and diagram C shows the waveforms of two output signals generated in diagram B;
Fig. 7 shows a schematic operation during absolute angle detection performed by the rotation angle detection device of Fig. 3, in which diagrams A and B show examples of the magnetic poles patterns in ones of the magnetic tracks, diagrams C and D show waveforms illustrating the phases of the signals sensed by magnetic sensors associated with the magnetic tracks of diagrams A and B, respectively, and diagram E shows a waveform illustrating the phase difference between the sensed signals of diagrams C and D;
Fig. 8 shows another schematic operation during absolute angle detection performed by the rotation angle detection device of Fig. 3, in which diagrams A and B shows examples of the magnetic poles patterns in ones of the magnetic tracks, diagrams C and D show waveforms illustrating the phases of the signals sensed by magnetic sensors associated with the magnetic tracks diagrams A and B, respectively, and diagram E shows a waveform illustrating the phase difference between the sensed signal of diagrams C and D;
Fig. 9 is a block diagram showing an exemplary configuration of an absolute angle detection circuitry in the rotation angle detection device of Fig. 3;
Fig. 10 is a block diagram showing another exemplary configuration of an angle information output circuitry in the rotation angle detection device of Fig. 3;
Fig. 11 shows an enlarged cross sectional view of another exemplary configuration of the bearing assembly of Fig. 1;
Fig. 12 shows a fragmentary top view of another exemplary configuration of a magnetic encoder in the rotation angle detection device of Fig. 3;
Fig. 13 shows a fragmentary cross sectional view of an automotive vehicle drive motor for a hybrid automotive vehicle, with the motor being provided with a bearing assembly equipped with a rotation angle detection device according to the second embodiment of the present invention;
Fig. 14A shows a front elevational view of a schematic configuration of the rotation angle detection device in the bearing assembly of Fig. 13;
Fig. 14B shows a fragmentary enlarged cross sectional view of a magnetic encoder in the rotation angle detection device of Fig. 13;
Fig. 15A shows a cross sectional view of another exemplary configuration of the rotation angle detection device in the bearing assembly according to the embodiment in Fig. 13;
Fig. 15B shows a front elevational view of the rotation angle detection device of Fig. 15A as viewed from the magnetic sensors;
Fig. 15C shows an enlarged view of the portion identified by a reference sign "A" in Fig. 15A;
Fig. 16 shows a front elevational view of another exemplary configuration of the rotation angle detection device in the bearing assembly according to the embodiment in Fig. 13;
Fig. 17 shows a cross sectional view of an automotive vehicle drive motor for a hybrid automotive vehicle, with the motor being provided with a rotation angle detection device according to the second embodiment of the present invention;
Fig. 18 shows a schematic configuration of the rotation angle detection device of Fig. 17;
Fig. 19 shows a cross sectional view of a sensor assy that forms the magnetic sensor components in the rotation angle detection device of Fig. 17;
Fig. 20 shows a cross sectional view of the sensor assy of Fig. 19 in a stage prior to a compression molding step applied thereto;
Fig. 21 shows a cross sectional view of the sensor assy of Fig. 19 sandwiched between upper and lower dies;
Fig. 22 shows a cross sectional view of a wheel support bearing assembly equipped with a motor of an in-wheel type, with the bearing assembly including the rotation angle detection device of Fig. 13 according to the second embodiment mounted thereto;
Fig. 23 shows a cross sectional view taken along the line XXIII - XXIII in Fig. 22; and
Fig. 24 shows an enlarged view of the portion identified by a reference sign "XXIV" in Fig. 22.

### DESCRIPTION OF THE PREFERRED EMBODIMENTS

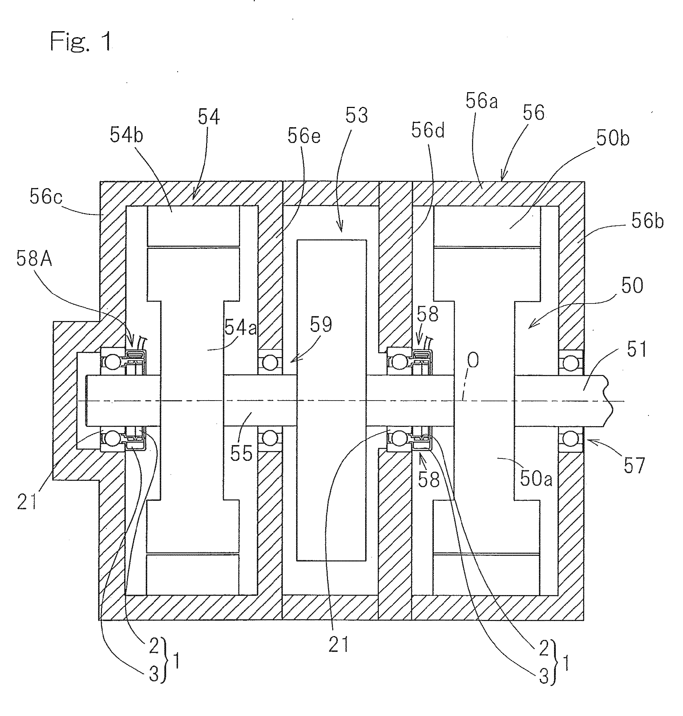

The first embodiment of the present invention will be described in connection with Figs. 1 to 10. Fig. 1 shows a cross sectional view of a drive motor for a hybrid automotive vehicle and its surroundings, with the motor being provided with a bearing assembly equipped with a rotation angle detection device according to the embodiment. In the figure, an output shaft (not shown) of an engine connects with the output shaft 51 of a drive motor 50, with the output shaft 51 in turn connecting via a reduction mechanism 53 with the output shaft 55 of a generator 54. The rotations of the drive motor 50 and the generator 54 and the condition of the reduction mechanism 53 are controlled in such a way to produce an optimal output condition. The drive motor 50, the reduction mechanism 53 and the generator 54 are disposed within a housing 56 of a sealed configuration. The housing 56 is defined by a circumferential wall 56a, first and second opposite end walls 56b, 56c, a first separator wall 56d separating the respective installation spaces of the drive motor 50 and the reduction mechanism 53, and a second separator wall 56e separating the respective installation spaces of the reduction mechanism 53 and the generator 54.

In the drive motor 50, a motor rotor 50a and a motor stator 50b disposed along the outer periphery of the motor rotor 50a form a main unit. The motor rotor 50a includes at a center thereof a rotational shaft which forms the output shaft 51. The motor stator 50b is disposed on the inner surface of the circumferential wall 56a of the housing 56. The output shaft 51 of the drive motor 50 is rotatably supported via first and second bearing assemblies 57, 58 by the housing 56, with the second bearing assembly 58 being equipped with a rotation angle detection device. Both the first and second bearing assemblies 57, 58 are rolling contact bearing assemblies, each including inner and outer rings. The outer ring of the first bearing assembly 57 and the outer ring of the second bearing assembly 58 are disposed on the first end wall 56b and the first separator wall 56d, respectively. The inner ring of the first bearing assembly 57 and the inner ring of the second bearing assembly 58 are fixedly force-fitted to the output shaft 51 and the output shaft 55, respectively.

In the generator 54, a generator rotor 54a and a generator stator 54b disposed along the outer periphery of the generator rotor 54a form a main unit. The generator rotor 54a is fitted to the output shaft 55. The generator stator 54b is disposed on the housing 56. The output shaft 55 of the generator 54 is rotatably supported via third and fourth bearing assemblies 59, 58A by the housing 56, with the fourth bearing assembly 58A being equipped with a rotation angle detection device. With such a configuration as discussed above, the rotations of the drive motor 50 and the generator 54 and the condition of the reduction mechanism 53 are controlled in such a way to produce an optimal output condition. The control of the drive motor 50 and the generator 54 requires highly accurate detection of rotor angles of their respective rotors. The rotor angles detected by the rotation angle detection devices that are equipped to the second and fourth bearing assemblies 58, 58A are used for control such as switching of a driving current to coils on the stators. The two bearing assemblies 58, 58A equipped with the respective rotation angle detection devices have the same configuration.

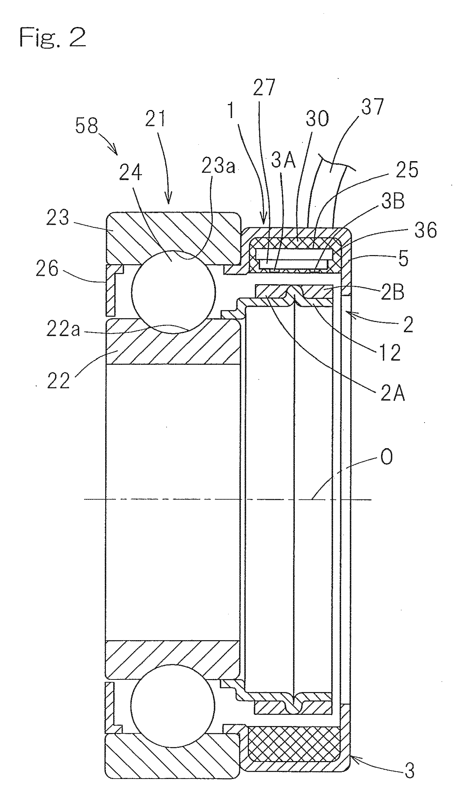

Fig. 2 shows an enlarged cross sectional view of the bearing assembly 58 equipped with a rotation angle detection device, via which the housing 56 rotatably supports the output shaft 51 of the drive motor 50. The bearing assembly 58 equipped with a rotation angle detection device forms a rolling contact bearing assembly 21 and a rotation angle detection device 1. The rolling contact bearing assembly 21 includes a rotational, inner ring 22, a stationary, outer ring 23, and a plurality of rolling elements 24 interposed between the inner and outer rings 22, 23. The rotation angle detection device 1 is disposed at an end of the rolling contact bearing assembly 21. The rolling contact bearing assembly 21 forms a deep-groove ball bearing. The inner ring 22 has an outer-diametric surface formed with a raceway surface 22a, while the outer ring 23 has an inner-diametric surface formed with a raceway surface 23a, such that the rolling elements 24 may roll over these raceway surfaces 22a, 23a. The inner ring 22 and the outer ring 23 define a bearing space delimited therebetween. A seal 26 seals an end of the bearing space that is opposite to an end provided with the rotation angle detection device 1.

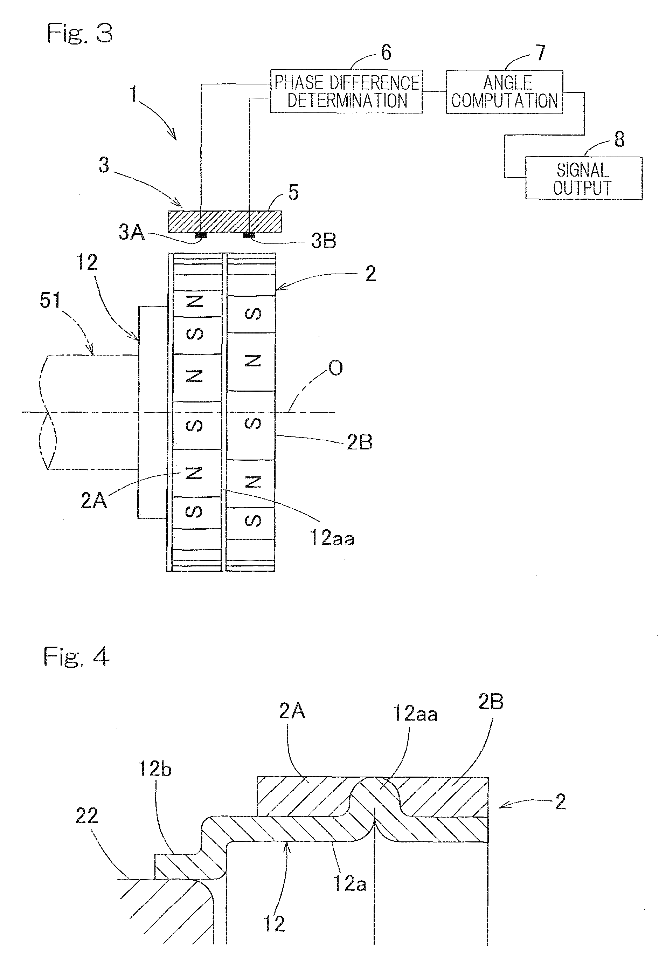

Fig. 3 shows a schematic configuration of a rotation angle detection device 1 according to the first embodiment of the present invention. The rotation angle detection device 1 includes a magnetic encoder 2 and a sensor unit that includes magnetic sensors 3A, 3B. The magnetic encoder 2 is disposed on the outer periphery of the inner ring 22 of the rolling contact bearing assembly 21 and includes a plurality of magnetic tracks 2A, 2B (i.e., in the illustrated example, two magnetic tracks) forming rings that are coaxial about the axis O defined by the magnetic encoder 2. The magnetic sensors 3A, 3B are operable to sense the magnetic fields of the respective magnetic tracks 2A, 2B, respectively. In the example shown in Fig. 3, the magnetic sensors 3A, 3B are provided in a sensor casing 5 which forms a stationary member, in such a way that the magnetic sensors 3A, 3B confront radially (in a radial direction) the corresponding magnetic tracks 2A, 2B through a small gap. Here, the magnetic sensor 3A opposes the magnetic track 2A, while the magnetic sensor 3B opposes the magnetic track 2B.

Each of the magnetic tracks 2A, 2B is a magnetic component forming a ring, which is magnetized with a plurality of magnetic pole pairs (a set of S and N pole pairs) of a substantially equal pitch in a circumferentially direction thereof. In the illustrated example, each of the magnetic tracks of a radial type has an outer peripheral surface magnetized with magnetic pole pairs. The illustrated two magnetic tracks 2A, 2B have different numbers of magnetic pole pairs. The magnetic tracks 2A, 2B may be designed to have a repetition of their phase relationship, during a complete rotation. More specifically, the magnetic tracks 2A, 2B may have magnetic pole pairs that have more than one point where their phase difference becomes zero (i.e., where their phases match with each other), per complete rotation. For example, in a configuration where their phases match with each other in every 120° rotation, detection of an absolute angle within a 120° segment is thus possible. In the illustrated rotation angle detection device 1 according to the first embodiment, the magnetic encoder 2 includes two rows of magnetic tracks 2A, 2B. However, the magnetic encoder may include three rows of magnetic tracks or more number of rows of magnetic tracks. Greater number of rows of magnetic tracks will result in a greater angular range in which detection of an absolute angle is possible.

As shown in Fig. 4 which is a fragmentary enlarged view of Fig. 2, the magnetic tracks 2A, 2B are commonly placed on a magnetic core metal 12. The magnetic encoder 2 including this core metal 12 and the magnetic tracks 2A, 2B is fitted to the outer periphery of the inner ring 22 of the rolling contact bearing assembly 21. Hence, the core metal 12 also forms a ring and has an outer peripheral surface on which the illustrated two magnetic tracks 2A, 2B are placed in such a way that they are axially aligned. The core metal 12 includes a magnetic tracks placement segment 12a as well as a tubular mounting segment 12b that axially extends at one side of the magnetic tracks placement segment 12a. The tubular mounting segment 12b has a diameter smaller than that of the magnetic tracks placement segment 12a. The core metal 12 can be secured to the inner ring 22 by mounting the tubular mounting segment 12b to the outer peripheral surface of the inner ring 22 of the rolling contact bearing assembly 21 by means of, for example, force-fitting. The magnetic tracks placement segment 12a of the core metal 12 includes a spacer between neighboring magnetic tracks 2A, 2B that separates these magnetic tracks 2A, 2B from each other. The spacer may include a bent portion 12aa forming a ring that is coaxial with the magnetic tracks 2A, 2B. The bent portion 12aa is a protrusion that is formed by bending the core metal 12 in an overlapping fashion - that is, by bending the core metal 12 in a folding fashion - such that the protrusion orients towards the side of the outer peripheral surface thereof where the magnetic tracks 2A, 2B are placed. The resulting bent portion 12aa allows for the separation of neighboring magnetic tracks 2A, 2B. In this way, the interference between the magnetic fields of the illustrated two magnetic tracks 2A, 2B can be reduced without the need to widen a space between the illustrated two magnetic tracks 2A, 2B. Accordingly, detection errors that may be caused by interferences of magnetic fields can be reduced, thereby allowing for the highly accurate sensing of the signals from the magnetic tracks 2A, 2B. Placement of the magnetic poles of the magnetic tracks 2A, 2B on the outer peripheral surface of a common core metal 12 results in a simplified construction. When the magnetic tracks 2A, 2B are designed to include one of a rubber magnet and a plastic magnet, it is preferred that the magnetic tracks 2A, 2B are molded integrally with the core metal 12 having a bent portion 12aa forming a spacer.

The inner ring 22 of the rolling contact beating assembly 21 may be provided with a detent mechanism (not shown) such as a key slot or cutout to prevent creep. Such a detent mechanism may concurrently serve as an indication or sign of attachment location or orientation of the magnetic encoder 2. In this case, the magnetic tracks 2A, 2B may be fixed in such a way that the starting positions of the magnetic tracks 2A, 2B coincide with the location of the detent mechanism, for example, a key slot. Such a configuration allows the matching of the phases of the starting positions of the magnetic tracks 2A, 2B to be performed mechanically, by assembling a bearing assembly 58 equipped with a rotation angle detection device into the drive motor 50.

In order to have resistance to oils and compatibility with high temperatures, the illustrated magnetic tracks 2A, 2B is constituted by a magnetic core metal 12 bonded by means of vulcanization with elastic material(s) that contain(s) a magnetic powder mixed therein, with the elastic material(s) having alternate magnetic poles formed in a circumferential direction, thus constituting a rubber magnet. Preferred elastic material(s) include, for example, NBR (Nitrile Rubber), HNBR (Hydrogenated Nitrile Rubber), acrylic rubbers and fluoro rubbers.

In another configuration of magnetic tracks 2A, 2B, the magnetic tracks 2A, 2B may be constituted by a resinous magnet having a magnetic core metal 12 molded with a resinous mold body that includes resin(s) containing a magnetic powder mixed therein, with the resinous mold body having alternate magnetic poles formed in a circumferential direction thereof.

In yet another configuration of magnetic tracks 2A, 2B, the magnetic tracks 2A, 2B may be constituted by a sintered magnet having a sintered compact containing a powder mixture of magnetic and non-magnetic powders, with the sintered compact having alternate magnetic poles formed in a circumferential direction thereof. The magnetic powder in such a magnet may include ferrite. A rare earth magnetic such as SmFeN, SmCo, NdFeB may be used.

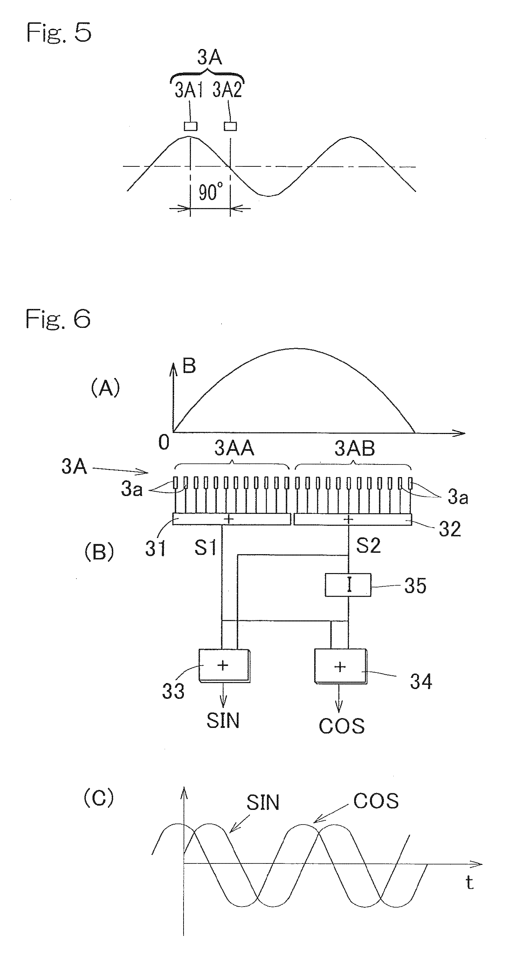

The magnetic sensors 3A, 3B may be configured to have detection resolution that is greater than the number of the magnetic pole pairs of the corresponding magnetic tracks 2A, 2B. In other words, the magnetic sensors 3A, 3B are configured to obtain information on a location within a magnetic pole of the magnetic tracks 2A, 2B. In the first exemplary configuration of, for instance, the magnetic sensor 3A, the magnetic sensor 3A may include two magnetic sensor elements 3A1, 3A2 such as Hall elements that are spaced apart from each other and aligned in a direction in which the corresponding magnetic poles are arranged, such that their phase difference is 90° (λ/4) with the pitch λ of a magnetic pole pair of the corresponding magnetic track 2A being equal to a period, as shown in Fig. 5. And the magnetic sensor 3A may be configured to compute the phase within a magnetic pole (ϕ=tan⁻¹(sinϕ/cosϕ)) based on the two signals of respective phases (sinϕ, cosϕ) obtained from the two respective magnetic sensor elements 3A1, 3A2, which are frequency multiplied. The same configuration may be applied to the illustrated other magnetic sensor 3B. The waveform shown in Fig. 5 represents the magnetic field strength as a function of the arrangement of the magnetic poles of the magnetic track 2A.

The magnetic sensors 3A, 3B of such a configuration will result in highly accurate detection of an absolute angle, since the magnetic fields distribution of the magnetic tracks 2A, 2B can be sensed not as ON/OFF signals but as sinusoidal waveform signals of analog voltages which enable much finer sensing.

In the second exemplary configuration of the magnetic sensors 3A, 3B in which they are configured to obtain information on a location within a magnetic pole of the magnetic tracks 2A, 2B, a line sensor system such as shown in Fig. 6, diagram B may be used. More specifically, for example, the magnetic sensor 3A includes first and second line sensors 3AA, 3AB, each including magnetic sensor elements 3a arranged in a direction of the arrangement of the magnetic poles of the corresponding magnetic track 2A. Fig. 6, diagram A illustrates a waveform representing the magnetic field strength B in one magnetic pole (half of a magnetic pole pair) segment of the magnetic track 2A. In this case, the first line sensor 3AA of the magnetic sensor 3A is associated with 90° phase segment of the 180° phase segment shown in Fig. 6, diagram A, while the second line sensor 3AB of the magnetic sensor 3A is associated with the remaining 90° phase segment of the 180° phase segment shown in Fig. 6, diagram A. With such a configuration, the signals sensed by the first line sensor 3AA are added by an adder circuit 31 to produce a signal S1, while the signals sensed by the second line sensor 3AB are added by an adder circuit 32 to produce a signal S2. Another adder circuit 33 adds the signal S1 and the signal S2 to produce a sine signal such as shown in Fig. 6, diagram C that corresponds to the magnetic field signals. Yet another adder circuit 34 adds the signal S1 and the signal from an inverter 35 to which the signal S2 is fed, to produce a cosine signal such as shown in Fig. 6, diagram C that corresponds to the magnetic field signals. Based on these two output signals of the respective phases, a location within a magnetic pole is determined.

Such a line sensor system including the magnetic sensor 3A, 3B will result in reduced distortion of the magnetic field patterns and reduced effects of noise, thereby allowing for highly accurate determination of the phases of the magnetic tracks 2A, 2B.

In the exemplary configuration shown in Fig. 3, for example, the magnetic sensors 3A, 3B are connected to a phase difference determination unit 6. The phase difference determination unit 6 is configured to determine the difference between the respective phases of the respective magnetic field signals generated by the respective magnetic sensors 3A, 3B. An angle computation unit 7 is connected with the phase difference determination unit 6 at a downstream thereof. The angle computation unit 7 is configured to compute an absolute angle of the magnetic tracks 2A, 2B, based on the difference determined by the phase difference determination unit 6. A signal output unit 8 including a signal cable 37 is configured to output the computed absolute angle.

Referring back to Fig. 2, the illustrated magnetic sensors 3A, 3B of the rotation angle detection device 1 are formed on a circuit board 27 along with other signal processing circuits. The circuit board 27 containing the magnetic sensors 3A, 3B is integrated into a sensor module 25 which is fitted inside a metallic sensor casing 25 forming a ring. These magnetic sensors 3A, 3B, the sensor module 25 and the sensor casing 5 form a sensor unit 3. The circuit board 27 in the sensor module 25 is coated with a mold 30 containing resinous material(s) or rubber material(s) and, via the sensor casing 5, is attached to the inner-diametric surface of one end of the outer ring 23 of the rolling contact bearing assembly 21. This results in the positioning of the magnetic sensors 3A, 3B such that they confront in a radial direction the corresponding magnetic tracks 2A, 2B. Since the relative positioning of the sensor casing 5 and the magnetic tracks 2A, 2B is thus accomplished at the time of the integration of the rotation angle detection device into the rolling contact bearing assembly 21, the positioning and fixation of the magnetic sensors 3A, 3B and the magnetic tracks 2A, 2B are simplified. The sensor module 25 is provided at a single location in a circumferential direction of the sensor casing 5. Therefore, the removal of only the sensor module 25 from the sensor casing 5 is possible, thus facilitating the maintenance of the sensor module 25.

Preferably, the material of the sensor casing 5 is magnetic material(s) in order to prevent the magnetic field generated by the motor from distorting the magnetic fields from the magnetic tracks 2A, 2B that are sensed by the magnetic sensors 3A, 3B. More preferably, the material of the sensor casing 5 is a rolled steel plate (SPCC) with a plate thickness of, for example, approximately 0.5 mm. A magnetic plate 36 having a surface area at least larger than the magnetic sensors 3A, 3B is arranged on the side opposite to the surface where the magnetic sensors 3A, 3B confront the magnetic tracks 2A, 2B. This also applies to configurations in which the material of the sensor casing 5 is not magnetic material(s). In this way, the penetration of leakage magnetic field from the drive motor 50 (Fig. 1) into the magnetic sensors 3A, 3B is blocked by the magnetic plate 36.

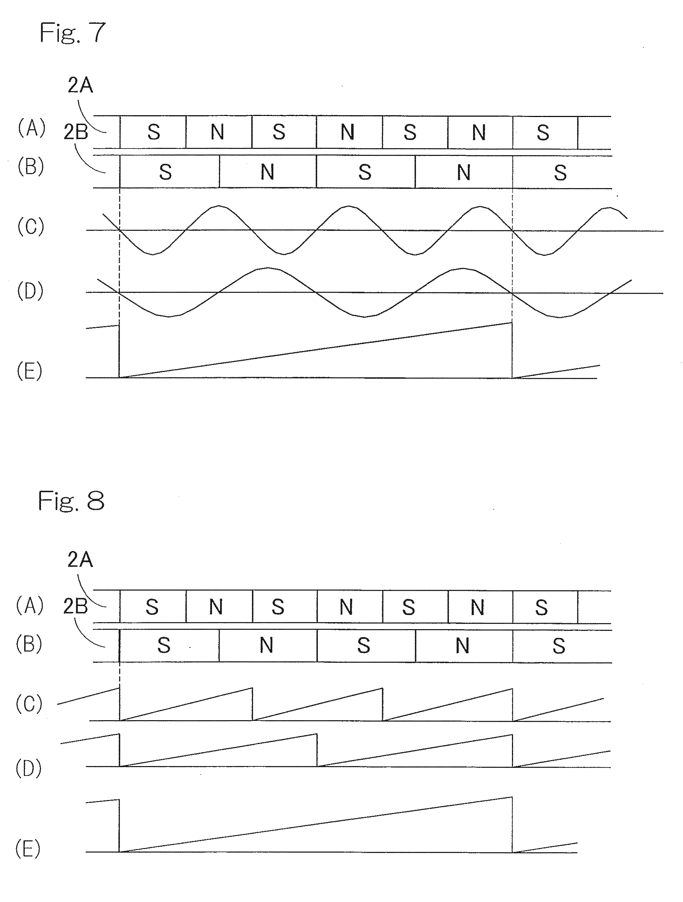

A schematic operation of absolute angle detection by the rotation angle detection device 1 according to the first embodiment will be described below in connection with Figs. 7, diagrams A to E and Figs. 8, diagrams A to E. If the number of the magnetic pole pairs of the illustrated two magnetic tracks 2B, 2A is P and P+n, respectively, the phase difference between the magnetic tracks 2A and 2B will be n number of magnetic pole pairs during a complete rotation. Accordingly, the phases of the signals sensed by the magnetic sensors 3A, 3B, from the corresponding magnetic tracks 2A and 2B, match with each other in every (360/n)° rotation.

Fig. 7, diagrams A and B show an example of the magnetic poles patterns in the magnetic tracks 2A, 2B, respectively, while Fig. 7, diagrams C and D show a waveform of the signal sensed by the magnetic sensors 3A, 3B from these magnetic tracks, respectively. In the illustrated example, the three magnetic pole pairs of the magnetic track 2A correspond to the two magnetic pole pairs of the magnetic track 2B, making it possible to detect an absolute angle within this segment. Fig. 7, diagram E is a diagram showing a waveform of the phase difference determined by the phase difference determination unit 6 such as shown in Fig. 3, based on the sensed signal of Fig. 7, diagram C and the sensed signal of Fig. 7, diagram D.

Fig. 8, diagrams A to E are a set of the figures showing the waveforms of the phases sensed by the magnetic sensors 3A, 3B, along the waveform of the phase difference. More specifically, Figs. 8, diagrams A and B show an example of the magnetic poles patterns in the magnetic tracks 2A, 2B, respectively, while Fig. 8, diagrams C and D show a waveform indicative of the phase sensed by the magnetic sensors 3A, 3B from these magnetic tracks, respectively. Fig. 8, diagram E is a diagram showing a waveform of the phase difference signal from the phase difference determination unit 6 (Fig. 3).

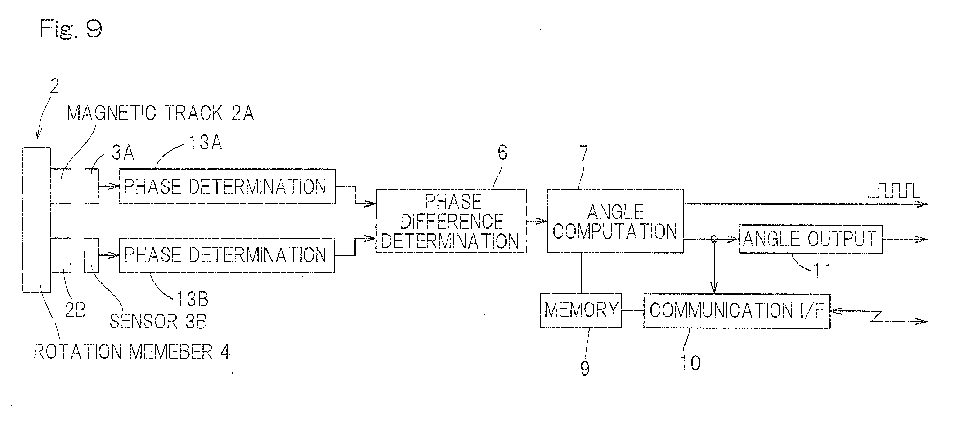

Fig. 9 shows an exemplary configuration of an absolute angle detection circuitry in the rotation angle detection device 1. Phase determination circuits 13A, 13B associated with the corresponding magnetic sensors 3A, 3B are configured to output the respective determined phase signals such as shown in Figs. 8, diagrams C and D, based on the respective signals sensed by the corresponding magnetic sensors 3A, 3B such as shown in Figs. 7, diagrams C and D. The phase difference determination unit 6 is configured to output, based on these determined phase signals, a phase difference signal such as shown in Fig. 8, diagram E. The angle computation unit 7 at a downstream of the phase difference determination unit 6 is configured to perform, according to preset computation parameters, conversion of the phase difference determined by the phase difference determination unit 6 into an absolute angle. Such computation parameters to be used by the angle computation unit 7 are stored in a memory 9 such as a non-volatile memory. The memory 9 contains, in addition to such computation parameters, a variety of information necessary for operations of the device such as the numbers of the magnetic pole pairs of the magnetic tracks 2A, 2B, the reference position for the measurement of an absolute angle, signal output protocols, etc. In the illustrated example, a communication interface 10 right downstream of the memory 9 is provided to update the information in the memory 9 via the communication interface 10. Such a configuration allows for various settings of the individual items contained in the memory 9 depending on the conditions or the environment in which the device is used, thereby enhancing the versatility of the device.

The absolute angle computed by the angle computation unit 7 is outputted through an angle information output circuit 11 or through the communication interface 10, in the form of a modulated signal such as parallel signals, serial data, analog voltages, PWM, etc. A pulse-form rotation signal is also outputted from the angle computation unit 7. Such a pulse-form rotation signal may be one of the signals sensed by the two magnetic sensors 3A, 3B. As discussed earlier, all of the magnetic sensors 3A, 3B have a multiplier function, thereby allowing for the outputting of a rotation signal with higher resolution.

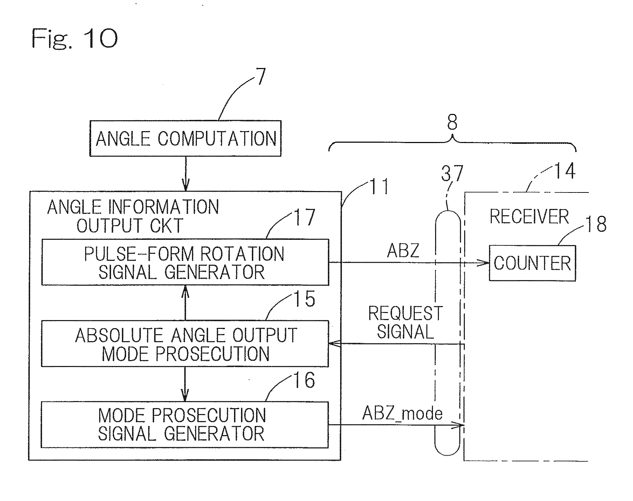

An angle information output circuit 11 such as shown in Fig. 9 may output the absolute angle computed by the angle computation unit 7, in the form of ABZ-phase signals including two pulse signals of the respective A-phase and B-phase that are displaced from each other by 90° phase as well as a pulse signal of Z-phase indicating a starting position. In this case, as shown in Fig. 10, the angle information output circuit 11 may be configured to receive from a receiver circuit 14 a request signal requesting the angle information output circuit 11 to output an absolute angle. Upon the request, an absolute angle output prosecution unit 15 that may be in the angle information output circuit 11 may become active, and a mode prosecution signal generator unit 16 that may be in the angle information output circuit 11 may generate a mode prosecution signal indicating that an absolute angle output mode is active(ABZ_mode =1). And a pulse-form rotation signal generator unit 17 that may be in the angle information output circuit 11 may generate A-phase, B-phase and Z-phase signals.

The receiver circuit 14 includes a position counter 18 that indicates the value of an absolute angle. The position counter 18, upon the receipt of a Z-phase signal, is reset to zero and starts counting the number of A-phase and B-phase signals that follow the Z-phase signal. The aforementioned absolute angle output mode operations end (ABZ_mode = 0), once the pulse-form outputs of the A-phase and B-phase signals reach the latest absolute angle value. After that, the angle computation unit 7 outputs pulse-form rotation signals (ABZ-phase signals) that indicate a detected change in the absolute angle caused by the rotation of the output shaft 51 (Fig. 1) of the motor, i.e., the rotation of the motor rotor 50a (Fig. 1). In this way, the receiver circuit 14 that obtains the absolute angle value by counting the pulses can constantly receive the latest absolute angle information even after the absolute angle output mode operations end (ABZ_mode = 0). The angle information output circuit 11, the signal cable 37, the receiver circuit 14, etc., form the signal output unit 8. Preferably, the signal cable 37 is of a shielded configuration.

The signal cable 37 requires, for example, six wires (power wire, GND wire, A-phase wire, B-phase wire, Z-phase wire and communication wire) in order to output the aforementioned absolute angle. Although it is preferred that each of the wires is designed to follow differential signals scheme in order to ensure noise immunity such as against the switching noise of the drive motor 50, this will result in the increased number of necessary conductors. Therefore, if less number of wires and space savings are the priority, it is preferred not to employ differential signals, thus minimizing the number of conductors, and to use a shielded cable against noise immunity.

Such a configuration in which pulse-form rotation signals such as Z-phase signals from the angle information output circuit 11 are used during the absolute angle output mode to output absolute angle information eliminates the need to provide a separate interface for outputting an absolute angle. This results in a simplified circuit arrangement of the rotation angle detection device 1 shown in Fig. 2 and in a simplified configuration of the bearing assembly 58 equipped with a rotation angle detection device 1 in which the rotation angle detection device 1 is integrally mounted to the bearing assembly.

In the rotation angle detection device 1, the magnetic sensors 3A, 3B and a signal processing circuitry including the angle information output circuit 11 shown in Fig. 9 are integrated into the sensor module 25 such as shown in Fig. 2. The sensor module 25 may be integrated on a single semiconductor chip. Such a configuration results in a variety of advantages such as reduced number of parts, improved precision in positioning the magnetic sensors 3A, 3B, reduced manufacturing cost, reduced assembling cost, as well as improvement in detection accuracy and reliability due to reduced signal noise, thereby providing an inexpensive rotation angle detection device 1 that is compact yet robust.

As such, the rotation angle detection device 1 includes a plurality of respective magnetic tracks 2A, 2B with different numbers of magnetic poles, with the magnetic tracks forming coaxial rings. The rotation angle detection device 1 also includes a plurality of respective magnetic sensors 3A, 3B operable to sense the magnetic fields emanating from the respective magnetic tracks 2A, 2B, with the respective magnetic sensors 3A, 3B being configured to obtain information on a location within a magnetic pole of the respective magnetic tracks 2A, 2B. The rotation angle detection device 1 further includes a phase difference determination unit 6 configured to determine a difference between the respective phases of the respective magnetic field signals generated by the respective magnetic sensors 3A, 3B, an angle computation unit 7 configured to compute an absolute angle of the magnetic tracks 2A, 2B, based on the determined phase difference, and a signal output unit 8 configured to output the computed absolute angle, for external retrieval. In this way, the rotation angle detection device 1 has a simplified configuration and can perform highly accurate detection of an absolute angle for external retrieval.

Also, such a configuration of including magnetic encoder 2 and magnetic sensors 3A, 3B, with the magnetic encoder 2 including the magnetic tracks 2A, 2B, results in a rotation angle detection device 1 having reduced size and weight. Hence, in the case of an automotive vehicle drive motor 50 defining a magnetic gap radially outwardly of the motor 50, such a rotation angle detection device 1 can be arranged radially inwardly of the motor rotor 50a. In this way, the incorporation of the rotation angle detection device 1 can be realized in a compact fashion, without undesirably increasing the axial dimension of the drive motor 50. Such a rotation angle detection device 1 arranged radially inwardly of the motor rotor 50a is less subject to the effects of electromagnetic noise that may be generated by leakage magnetic field of the drive motor 50, thereby allowing for stable detection of a rotation angle. Such a configuration will result in a rotation angle detection device 1 that is compact, lightweight, simple to mount and can considerably reduce the number of external parts and electric circuits necessary for operations, even when the device is used for an automotive vehicle drive motor 50.

In the illustrated rotation angle detection device 1 according to the first embodiment, the magnetic encoder 2 includes two rows of magnetic tracks 2A, 2B. However, the magnetic tracks are not limited to two magnetic tracks but also encompass a combination of equal to or more than three magnetic tracks with different numbers of magnetic pole pairs, which allows for a greater angular range in which detection of an absolute angle is possible. For a drive motor 50 (Fig. 1) that has Pn number of rotor poles, the rotation angle detection device 1 may be designed to have a combination of P and P+Pn numbers of magnetic pole pairs in the tracks by adjusting the difference in number of the magnetic pole pairs in the rotation angle detection device 1, thus enabling detection of the electric angle of the drive motor 50. This is advantageous for the control of the rotation of the drive motor 50.

As for the bearing assembly 58 equipped with a rotation detection angle device in which the bearing assembly includes the rotation angle detection device 1 integrally mounted thereto, the rotation angle detection device 1 is mounted to the rolling contact bearing assembly 21. This results in a drive motor 50 which is not only provided with an ability to detect an absolute angle but also achieves reduced number of the parts for the drive motor 50, reduced number of steps necessary for assembling, and reduction in size. The advantage of the bearing assembly 58 equipped with a rotation angle detection device where the bearing assembly 58 rotatably supports the output shaft 51 of the drive motor 50 also applies to the bearing assembly 58A equipped with a rotation angle detection device where the bearing assembly 58A rotatably supports the output shaft 55 of the generator 54.

The following list of advantages can be provided by the first embodiment:
- The configuration according to the first embodiment of magnetic encoder 2 and magnetic sensors 3A, 3B results in a rotation angle detection device having reduced size and weight. Hence, in the case of an automotive vehicle drive motor 50 defining a magnetic gap radially outwardly of the motor 50, such a rotation angle detection device 1 can be arranged such that the magnetic sensors 3A, 3B are arranged radially inwardly of a rotor 50a of the motor 50. In this way, the incorporation of the rotation angle detection device can be realized in a compact fashion, without undesirably increasing the axial dimension of the automotive vehicle drive motor 50.
- Such a rotation angle detection device 1 that can be arranged radially inwardly of the motor rotor 50a is less subject to the effects of electromagnetic noise that may be generated by leakage magnetic field of the motor, thereby allowing for stable detection.
- By arranging a magnetic plate 36 on the side opposite to the surface where the magnetic sensors 3A, 3B are arranged, the penetration of leakage magnetic field can be prevented, thereby allowing for a stable detection.
- Since the magnetic sensors 3A, 3B use a differential detection scheme in which information on magnetic phases is obtained from the magnetic field strength distributing within a magnetic pole on the magnetic encoder 2, the magnetic sensors 3A, 3B are less subject to the effects of noise such as leakage magnetic field, thereby sensing the signals from the magnetic encoder 2 precisely and allowing for highly accurate detection of an angle.
- Since a sensor unit 3 includes therein angle computation circuitry that includes, for example, a phase difference determination unit 6, an angle computation unit 7 and a signal output unit, there is no need to provide a controller of the motor with additional circuitry such as a RD converter, thereby resulting in reduced number of circuit parts, reduced occupation space by circuits, and reduced parts cost.
- Since the transmission of information from the sensor unit 3 to the motor controller can be performed with digital signals that have strong immunity against noise, such information is less subject to enormous noise from a motor. The noise immunity may be further enhanced by the use of a shielded cable, thereby improving the reliability of the signal transmission.
- Since the rotation angle detection device 1 is integrated with a bearing assembly 21, there is no need to adjust, for example, a sensor gap and therefore can achieve reduction in size.

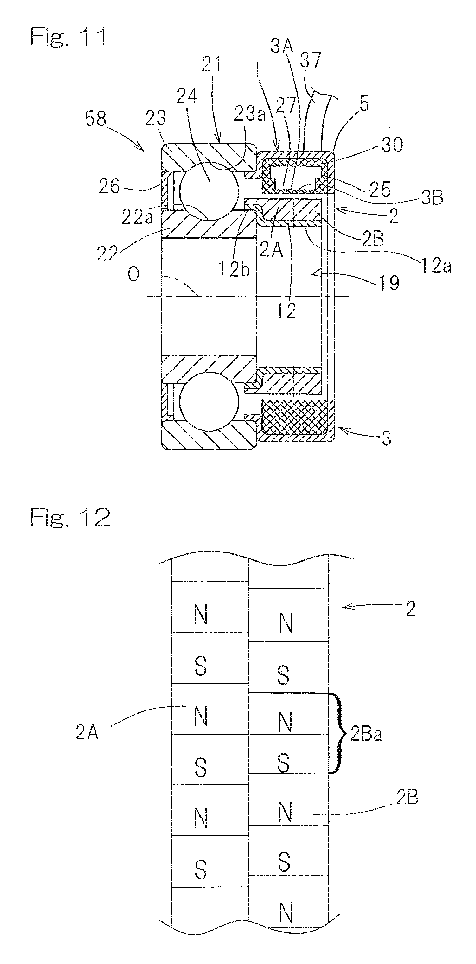

Fig. 11 shows another exemplary configuration of a bearing assembly 58 equipped with a rotation angle detection device. This bearing assembly 58 equipped with a rotation angle detection device differs from the exemplary configuration as shown in Fig. 2 in that the bent portion 12aa of the core metal 12 forming a spacer interposed between the illustrated magnetic tracks 2A, 2B is omitted from the rotation angle detection device 1. The core metal 12 includes a magnetic tracks placement segment 12a as well as a tubular mounting segment 12b that may be mounted to the outer periphery of the inner ring 22 of the rolling contact bearing assembly 21. The tubular mounting segment 12b has a diameter greater than that of the magnetic tracks placement segment 12a.

In this exemplary configuration, the core metal 12 of the magnetic encoder 2 includes a visible indication 19, such as a cutout, indicating a specific location in the arrangement of the magnetic poles of the magnetic tracks 2A, 2B. The indication 19 may be a symbol or marking. The specific location is, for example, a starting position of the magnetic encoder 2, with the starting position being a single location along the entire circumference of the magnetic encoder 2. Such an indication 19 allows for checking a proper phase positioning while assembling to the drive motor 50 the bearing assembly 58 equipped with a rotation angle detection device. Other features are similar to those of the exemplary configuration as shown in Fig. 2. Where the magnetic encoder 2 includes magnetic tracks 2A, 2B including the respective arrangement of magnetic poles and the characteristics of the respective arrangement differ depending on whether a rotation direction thereof is clockwise or counterclockwise, it is preferred that the core metal 12 of the magnetic encoder 2 includes a visible indication (not shown) indicating whether the proper rotation direction is clockwise or counterclockwise. Such a configuration prevents the magnetic encoder 2 from being assembled to the magnetic encoder 2 in an incorrect direction of rotation. Where there is no possibility of the magnetic encoder 2 being assembled in incorrect direction of rotation thanks to, for example, an asymmetric shape of the core metal 12, such an indication indicating whether the proper rotation direction is clockwise or counterclockwise may be omitted.

Other configurations that enable a proper phase positioning when assembling to the drive motor 50 the bearing assembly 58 equipped with a rotation angle detection device include a configuration of powering on the drive motor 50 after assembling the bearing assembly 58 equipped with a rotation angle detection device to the drive motor 50 and positioning the drive motor 50 approximately at the starting position in such a way that the matching between the drive motor 50 and the starting position is accomplished, in order to perform the capturing of the starting position. The rotation angle detection device 1 may include a starting position registration unit (not shown) that is configured to perform such an operation of capturing a starting position and to register the captured position as a starting position, for use in determination of an angle. The starting position registration unit to which the information on a starting position is registered may, for example, be constituted by part of the sensor module 25 or by a non-volatile memory (flash memory, EEPROM, fuse memory, etc.) formed on the circuit board 27 mounting the magnetic sensors 3A, 3B. Such a configuration eliminates the need to mechanically adjust the initial phase. Instead, a one-time operation of capturing and registering at the time of assembling will suffice. Furthermore, re-adjustment is possible by performing again such an operation of capturing and registering.

Fig. 12 shows another exemplary configuration of magnetic poles of the magnetic tracks 2A, 2B in a rotation angle detection device 1. In this exemplary configuration, a bent portion 12aa (Fig. 4) of the core metal 12 interposed between neighboring magnetic tracks 2A, 2B to form a spacer that separates these magnetic tracks 2A, 2B from each other is omitted. In this illustrated example, the width of the magnetic poles N, S of one magnetic pole pair 2Ba on the magnetic track 2B, in which this one magnetic pole pair 2Ba constitutes a starting position of the magnetic track 2B, is smaller than the width of the magnetic poles N, S of the corresponding magnetic pole pair on the other magnetic track 2A. The widths of the remaining magnetic poles on both the magnetic track 2A and the magnetic track 2B are the same. Such a configuration allows for determining a starting position, based on the difference between the width of the magnetic poles on the magnetic track 2A and the magnetic track 2B.

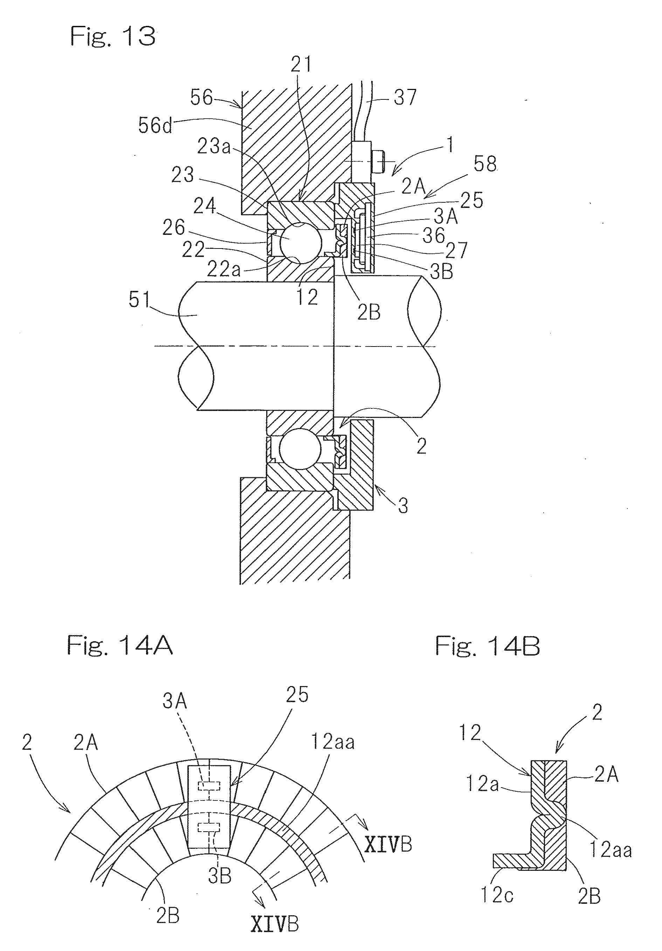

Fig. 13 shows a fragmentary cross sectional view of an automotive vehicle drive motor for a hybrid automotive vehicle, with the motor being provided with a bearing assembly equipped with a rotation angle detection device according to the second embodiment of the present invention. In this embodiment, the bearing assembly 58 equipped with a rotation angle detection device such as shown in Fig. 2 now includes a magnetic encoder 2 of an axial type that includes a magnetic core metal 12 forming a ring, with the core metal 12 having an axial end being magnetized with a plurality of magnetic pole pairs of an equal pitch in a circumferentially direction thereof. Here, the illustrated two magnetic tracks 2A, 2B are disposed such that they adjoin each other with the inner and outer peripheries. In this case, magnetic sensors 3A, 3B are disposed in such a way they axially confront the corresponding magnetized surfaces of the respective magnetic tracks 2A, 2B.

The magnetic tracks 2A, 2B of an axial type may similarly be attached to an inner ring 22 of the rolling contact bearing assembly 21 via a common magnetic core metal 12. As shown in Figs. 14A and 14B, the core metal 12 includes a flat, magnetic tracks placement segment 12a that forms a ring and a tubular mounting segment 12c that axially extends from the inner-diametric end of the magnetic tracks placement segment 12a. The respective magnetic tracks 2A, 2B are placed on the magnetic tracks placement segment 12a in such a way they are coaxial to each other. The core metal 12 can be secured to an inner ring 22 by mounting the tubular mounting segment 12c to the outer peripheral surface of the inner ring 22. Here, too, the magnetic tracks placement segment 12a of the core metal 12 includes a spacer between neighboring magnetic tracks 2A, 2B that separates these magnetic tracks 2A, 2B from each other. The spacer may include a bent portion 12aa forming a ring that is coaxial with the magnetic tracks 2A, 2B and that extends in a circumferential direction thereof. The bent portion 12aa is a two-layer protrusion that is formed by bending the core metal 12 in an overlapping fashion - that is, by bending the core metal 12 in a folding fashion - such that the protrusion orients towards the side of the surface thereof where the magnetic tracks 2A, 2B are placed. The resulting bent portion 12aa allows for the separation of neighboring magnetic tracks 2A, 2B.

In the second embodiment, a sensor casing 5 is secured to a housing 56 of the drive motor 50. Here, the sensor casing 5 with which the sensor module 25 is associated is a sealed configuration including non-magnetic metal(s) and/or resinous material(s) that form a surface opposing the magnetic tracks 2A, 2B. The sensor module 25 includes part of the signal cable 37 and also includes a circuit board 27 on which the magnetic sensors 3A, 3B are formed, with the part of signal cable 37 as well as a circuit board 27 being enclosed by the non-magnetic metal(s) and/or resinous material(s). Other features of this second embodiment are similar to those of the first embodiment shown in Fig. 1 to Fig. 10.

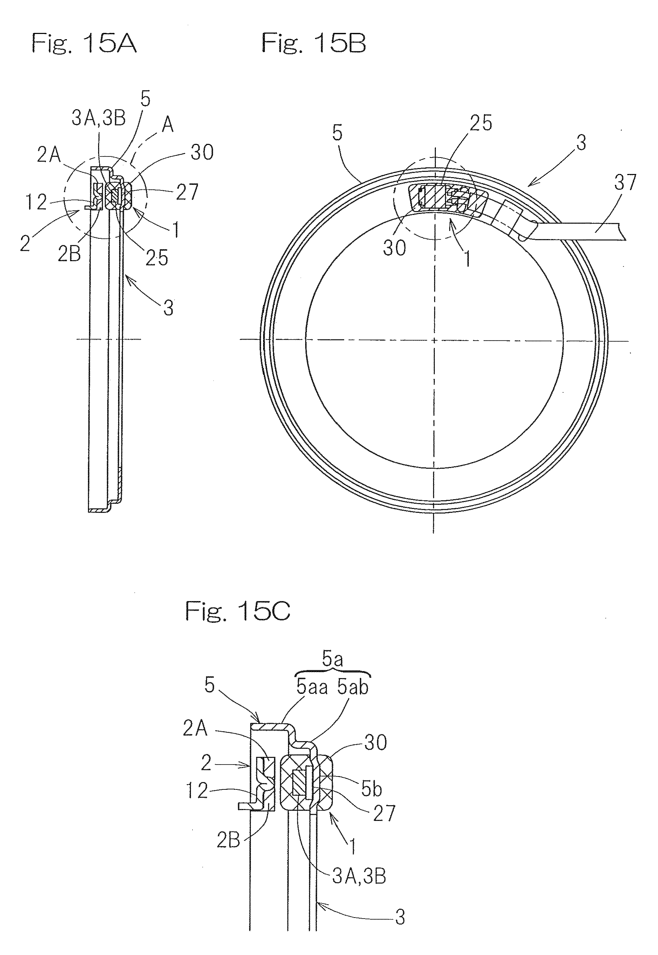

Figs. 15A to 15C show another exemplary configuration of the sensor casing 5 in the bearing assembly 58 equipped with a rotation angle detection device according to the second embodiment shown in Fig. 13. The sensor casing 5 is an annular, magnetic product having a center thereof matching with the central axis of a rolling contact bearing assembly 21. The sensor casing 5 includes a cylindrical segment 5a and a collar segment 5b. The cylindrical segment 5a includes a step having a larger diameter portion 5aa and a smaller diameter portion 5ab and the collar segment 5b radially extends from the edge of the smaller diameter portion 5ab of the cylindrical segment 5a. The circuit board 27 on which magnetic sensors 3A, 3B are formed is connected with one end of the signal cable 37 that outputs the signal of a determined absolute angle, for external retrieval. The sensor module 25 including the magnetic sensors 3A, 3B and the circuit board 27 is secured to the collar segment 5b of the sensor casing 5. The sensor module 25 is coated with a mold 30. The mold 30 contains material(s) having rubber elasticity. Preferably, such material(s) is/are rubber(s) and thermoplastic elastomer(s). Preferred rubber(s) is/are nitrile rubber(s) and fluoro rubber(s). These preferred rubber(s) are excellent in resistance to heat, cold temperature property, and resistance to oils. Preferred thermoplastic elastomer(s) is/are vinyl chlorides, esters, and amides. These preferred thermoplastic elastomer(s) is/are excellent in resistance to heat and to oils.

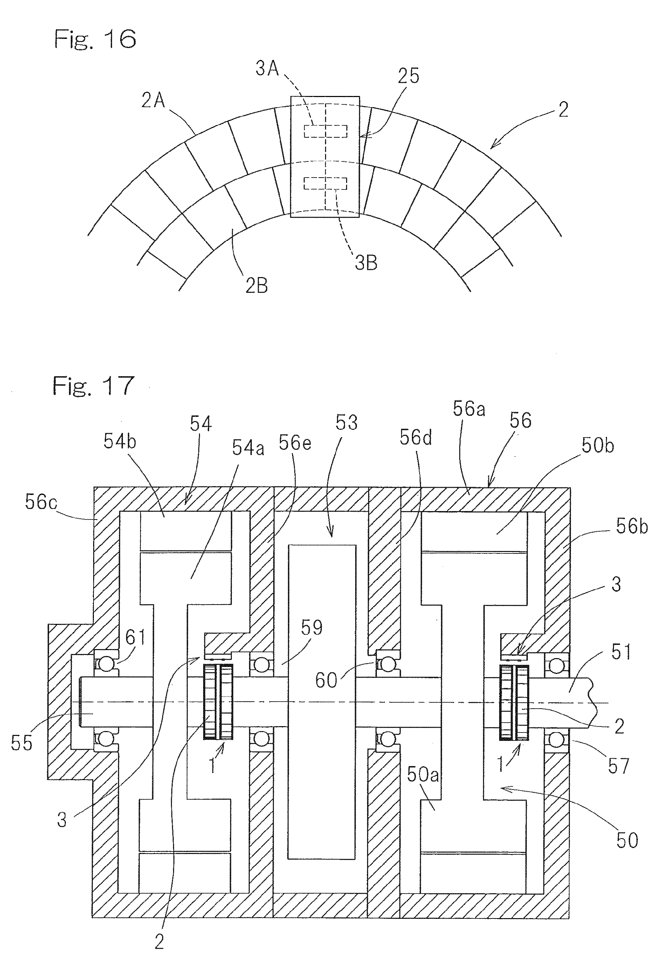

Fig. 16 shows a front elevational view of another exemplary configuration of a rotation angle detection device according to the second embodiment shown in Fig. 13. In this rotation angle detection device 1, the bent portion 12aa of the core metal 12 forming a spacer interposed between the illustrated two magnetic tracks 2A, 2B shown in the exemplary configuration of Fig. 13 is omitted. Other features of the rotation angle detection device of this example are similar to those in the exemplary configuration of Fig. 13.

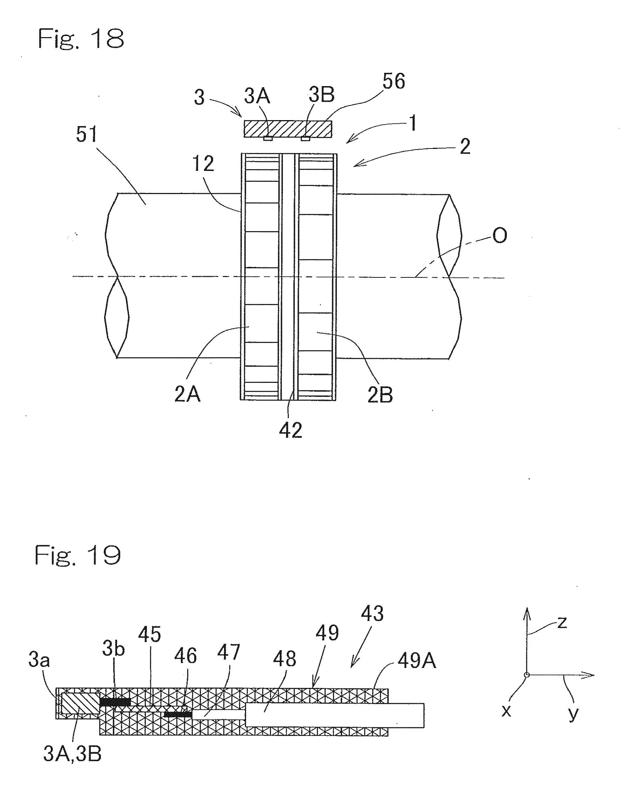

Figs 17 and 18 show a rotation angle detection device according to the second embodiment. In this embodiment, the bearing assemblies 58, 58A equipped with the respective rotation angle detection devices in the first embodiment shown in Fig. 1 are replaced with rotation angle detection devices 1. More specifically, a hybrid automotive vehicle provided with rotation angle detection devices according to the second embodiment include respective magnetic encoders 2 each including magnetic tracks 2A, 2B of a radial type such as shown in Fig. 18, with the respective magnetic encoders 2 being directly attached to the output shaft 51 of the drive motor 50 and the output shaft 55 of the generator, respectively. The bearing assemblies 58, 58A (Fig. 1) equipped with the respective rotation angle detection devices are replaced with standard bearing assemblies 60, 61, respectively, such that the standard bearing assemblies 60, 61 now occupy where the bearing assemblies 58, 58A were provided, respectively.

The illustrated rotation angle detection device 1 includes two respective magnetic tracks 2A, 2B of a radial type having a core metal, with the magnetic tracks 2A, 2B being disposed on the outer peripheries of the output shafts 51, 55, and being axially aligned to form rings that are coaxial with respect to the axis O of the output shafts 51, 55. The illustrated rotation angle detection device 1 also includes two magnetic sensors 3A, 3B operable to sense the respective magnetic fields of the respective magnetic tracks 2A, 2B having a core metal.

The magnetic sensors 3A, 3B are provided in the housing 56 of the drive motor 50 such that they confront radially (in a radial direction) the corresponding magnetic tracks 2A, 2B attached to a core metal, respectively, through a small gap. A magnetic spacer 42 forming a ring is interposed between neighboring magnetic tracks 2A, 2B having a core metal, with the spacer 42 separating the magnetic tracks 2A, 2B from each other. Other features are similar to those of the respective rotation angle detection devices 1 that have been discussed.

Fig. 19 shows a cross sectional view of a sensor assy (i.e., a sensor assembly) that forms magnetic sensor components in a rotation angle detection device such as shown in Fig. 17 according to the second embodiment of the present invention. A sensor assy 43 includes the magnetic sensors 3A, 3B, an electrode terminal 45, a cable core wire 46, a cable insulator coating 47, and a cable cover 48. An elastic component 49 covers the main portion of the sensor assy 43. The end 3a of the magnetic sensors 3A, 3B opposes the magnetic encoder, while the sensor terminal 3b of the magnetic sensors 3A, 3B is electrically connected with the electrode terminal 45. The direction in which the sensor terminal 3b and the electrode terminal 45 extend is defined as y-direction, while the direction in which the thickness of the electrode terminal 45 is measured is defined as z-direction. And a direction perpendicular to both y-direction and z-direction is defined as x-direction.

The electrode terminal 45 includes an end in y-direction that is electrically connected with the cable core wire 46, which in turn is provided with the cable insulator coating 47 that ensures the electric insulation of the cable core wire 46. Furthermore, the cable cover 48 covers the outside of the cable insulator coating 47. Peripheral components are defined as including the electrode terminal 45, the cable core wire 46, the cable insulator coating 47 and the cable cover 48 and excluding the magnetic sensors 3A, 3B.

The elastic component 49 includes, for example, material(s) having rubber elasticity, such as a rubber containing a vulcanizing agent mixed therein. The elastic component 49 sealingly encloses with no gap the entirety of the magnetic sensors 3A, 3B, the electrode terminal 45, the cable core wire 46 and the cable insulator coating 47. The elastic component 49 also sealingly encloses with no gap a substantial portion of the cable cover 48, while the elastic component 49 leaves uncovered one end in y-direction of the cable cover 48.

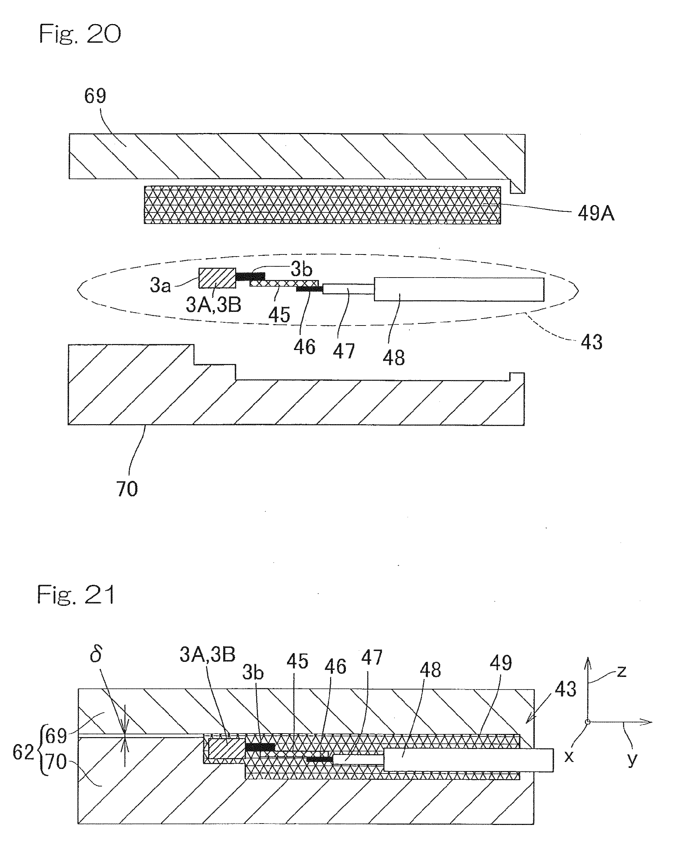

The material(s) of the elastic component 49 may include rubber(s) such as nitrile rubber(s) and fluoro rubber(s) which are preferred for their excellent resistance to heat, cold temperature property and resistance to oils. The material(s) of the elastic component 49 may include other rubber(s). As an alternative to such rubber(s), thermoplastic elastomer(s) may be used. Preferred thermoplastic elastomer(s) include vinyl choloride(s), ester(s) and amide(s) which are preferred for their excellent resistance to heat and to oils. In any case, the material(s) to be molded to the sensor assy 43 may be any material having rubber elasticity. The molding is accomplished by a die compression molding process such as shown in Figs. 20 and 21.

Fig. 20 shows a cross sectional view illustrating a stage prior to a die compression molding step which involves the use of the rubber(s), the sensor assy, as well as the upper and lower dies of a die assembly. Fig. 21 shows a cross sectional view illustrating the upper and lower dies sandwiching the rubber(s) as well as the sensor assy interposed therebetween.

The molding steps will be described below. The die assembly 62 including the upper and lower dies 69, 70 sandwiches the sensor assy 43 together with the rubber(s) 49A containing a vulcanizing agent mixed therein, thereby molding the sensor assy 43 with the rubber(s) 49A. More specifically, as shown in Fig. 20, the sensor assy 43 as well as the rubber(s) 49A containing a vulcanizing agent mixed therein are positioned between the upper and lower dies 69, 70. Then, as shown in Fig. 21, the upper and lower dies 69, 70 are heated for a given period of time while sandwiching the sensor assy 43 and etc., completely therebetween. And a pressure is applied to the sensor assy 43 and etc. In this way, a compression molding process is carried out.

Here, preferably, the pressure is applied, with the rubber(s) 49A being heated and softened in advance, since applying a pressure to the sensor assy 43 and etc., without pre-heating might result in damaging electronic components including the magnetic sensors 3A, 3B. In other words, in the compression molding step in accordance with this embodiment, since the upper and lower dies 69, 70 are first heated to soften the rubber(s) 49A and a pressure is applied between the upper and lower dies 69, 70, damaging of the electronic components including the magnetic sensors 3A, 3B by the pressing force of hard rubber(s) can be prevented.

A die assembly that can be used is not limited to a die assembly consisting of upper and lower dies but includes any die assembly system that includes upper and lower dies. In this embodiment, the upper and lower dies 69, 70 are heated for a give period of time. However, heating of only one of the upper and lower dies 69, 70 for a given period of time may suffice, depending on the ambient temperature and the interval from the last time that the heating was performed. The heating of the die assembly 62 is not limited to a given period of continuous heating but includes intermittent heating.

The upper and lower dies 69, 70 are designed to create therebetween a cavity with a predefined volume. Therefore, insufficient amount of the rubber(s) might result in the formation of pores in the elastic component, while excessive amount of the rubber(s) might result in the die assembly 62 not being able to accommodate the rubber(s), thereby leading to incomplete molding. Hence, preferably, a clearance δ (Fig. 21) is created that discharges the excess in the rubber(s) from the die assembly 62 when a pressure is applied to the sensor assy 43 and etc., i.e., a target to be compressed.

In this embodiment, the upper and lower dies 69, 70 are designed to create a clearance defining a predetermined gap δ therebetween when a pressure is applied to a certain target to be compressed. Such a configuration allows for preventing the formation of pores in the elastic component that may be caused by insufficient amount of the rubber(s) at the time of applying a pressure to the sensor assy 43 and etc., i.e., a target to be compressed. Also, such a configuration allows for preventing incomplete molding due to the die assembly 62 not being able to accommodate the rubber(s) that may be caused by excessive amount of the rubber(s).

Such a sensor assy 43 and a method of producing it will result in improved durability of a sensor assy 43, since the sensor assy 43 is molded with material(s) 49A having rubber elasticity or thermoplastic elastomer(s). In this way, a failure such as fracture of the sensor assy 43 due to vibrations or external forces can be prevented. Furthermore, the elasticity of the elastic component 49 can absorb the difference between the possibly differing thermal expansions of the sensor assy 43 and the elastic component 49 that forms a mold, which may be caused by, for example, the ambient temperature and the self-heating of the electronic components. Therefore, possible formation of undesirable gaps between the sensor assy 43 and the elastic component 49 can be prevented, thereby maintaining the water-proof property of the sensor assy 43. Furthermore, since the molding is carried out by a compression molding process with a die assembly, a large number of sensor assys 43 can be produced in a single molding step. Accordingly, the manufacturing cost of the sensor assys 43 per unit of time can be reduced with respect to the manufacturing cost by a conventional injection molding process.

In the aforementioned method of producing a sensor assy 43, a pressure is applied between the upper and lower dies 69, 70, only after the sensor assy 43 and the rubber(s) 49A are first interposed and sandwiched between the upper and lower dies 69, 70 and then the upper and lower dies 69, 70 are heated at a predetermined temperature to soften the rubber(s) 49A. In this way, damaging of the electronic components including the magnetic sensors 3A, 3B by the pressing force of per-softened, hard rubber(s) can be prevented. Since the upper and lower dies 69, 70 are designed such that a predetermined clearance δ is created therebetween when a pressure is applied to a target to be compressed, applying a pressure to the sensor assy 43 and etc., i.e., a target to be compressed will allow for smooth discharging of the excess in the rubber(s) from the die assembly 62.

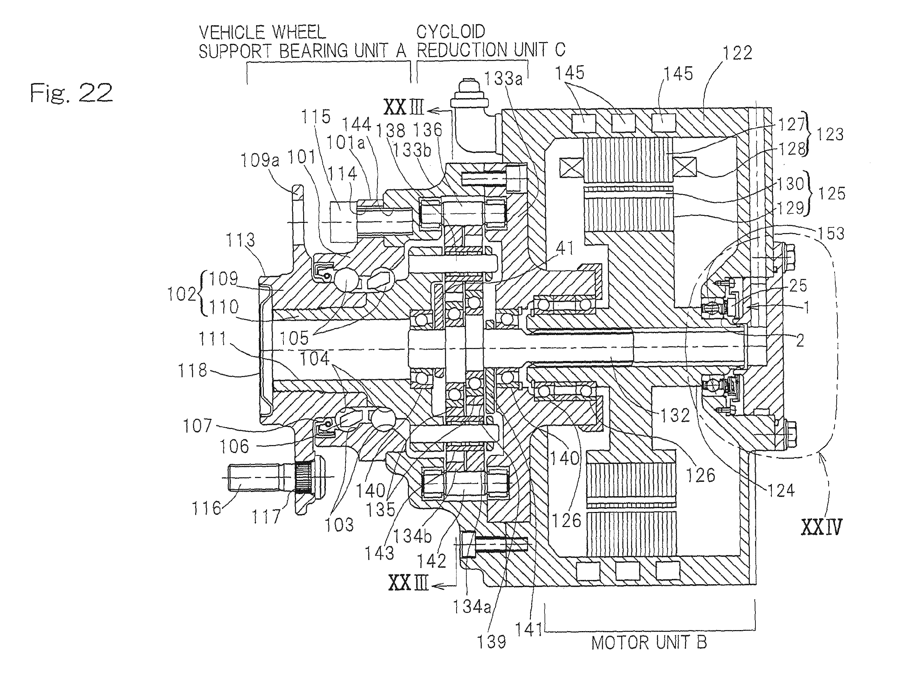

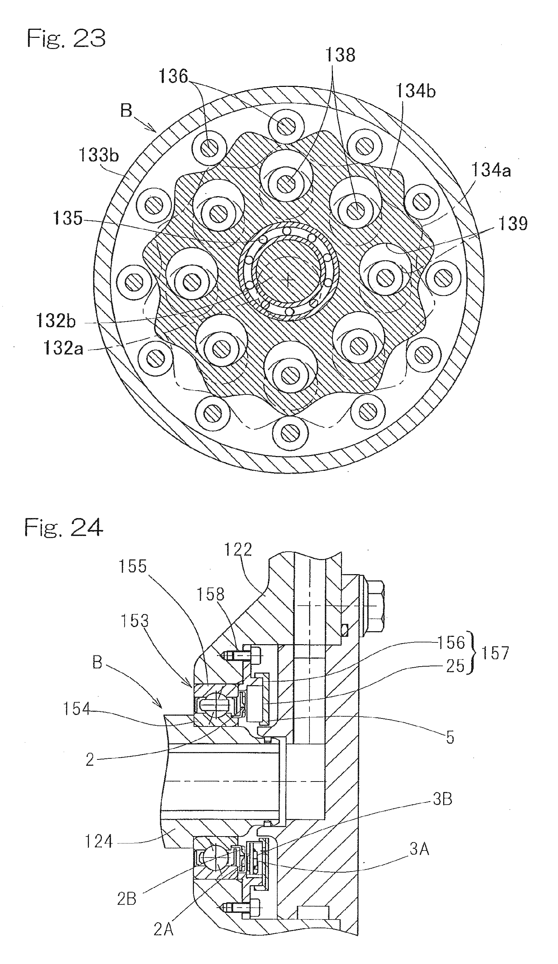

An example in which a rotation angle detection device according to an embodiment of the present invention is applied to a motor of an in-wheel type will be described below in connection with Figs. 22 to 24. In this example, a rotation angle detection device 1 of an axial configuration such as shown in Fig. 13 according to the second embodiment is associated with a support bearing assembly 153 that rotatably supports a rotational output shaft 124, with the support bearing assembly 153 being located at a rear end side in a motor unit B and the rotation angle detection device 1 being positioned axially outwardly of the support bearing assembly 153. As shown in an enlarged view of Fig. 24, a double-row magnetic encoder 2 is fixedly fitted to the inner ring 154 of the support bearing assembly 153. A sensor casing 5 enclosing a sensor module 25 including magnetic sensors 3A, 3B is positioned such that the sensor casing 5 opposes the magnetic encoder 2. The sensor module 25 as well as a sensor support frame 156 that holds the sensor casing 5 enclosing the sensor module 25 constitute sensor components unit 157. The sensor components unit 157 is secured to a motor housing 122 by bolts 158. The sensor components unit 157 is positioned by an end face of the outer ring 155 of the support bearing assembly 153 with the end face being in abutment with the sensor components unit 157. Furthermore, the sensor components unit 157 is radially positioned by an inner-diametric surface of an open cavity formed in the motor housing 122, with the inner-diametric surface of the open cavity being in engagement with part of the sensor support frame 156. The open cavity formed in the motor housing 122 enables the mounting of the bearing assembly, while the motor housing 122 concurrently serves as a housing for the bearing assembly. These positioning configurations enable the sensor components unit 157 being fixedly held in a predefined position relative to the rotational output shaft 124 and the magnetic encoder 2.

The construction of a wheel support bearing assembly equipped with a motor of an in-wheel type such as shown in Fig. 22 will be described below. The wheel support bearing assembly includes a vehicle wheel support bearing unit A, the motor unit B, and a reduction unit C interposed between the vehicle wheel support bearing unit A and the motor unit B. In the wheel support bearing assembly, a drive wheel supported by the vehicle wheel support bearing unit A includes a hub unit connecting coaxially with the rotational output shaft 124 of the drive motor unit B. The reduction unit C includes a cycloid reduction mechanism that includes a rotational input shaft 132 connecting coaxially with the rotational output shaft 124 of the motor unit B, with the rotational input shaft 132 having eccentric members 132a, 132b associated therewith such as shown in Fig. 23. The eccentric members 132a, 132b are provided with respective curved plates 134a, 134b that are assembled via bearing assemblies 135 to the corresponding eccentric members 132a, 132b. In this way, the eccentric motion of the curved plates 134a, 134b is transmitted to the vehicle wheel support bearing unit A shown in Fig. 22 in the form of rotational movement. It is to be noted that hereinafter in this specification, terms "outboard" and "inboard" represent one side of the vehicle body away from the longitudinal center of the vehicle body and the other side of the vehicle body close to the longitudinal center of the vehicle body, respectively, when assembled in the vehicle body.

The vehicle wheel support bearing unit A includes an outer member 101 having an inner periphery formed with a plurality of rows of first raceway surfaces 103, an inner member 102 having an outer periphery formed with a plurality of rows of second raceway surfaces 104 opposing the first raceway surfaces 103, and a plurality of rows of rolling elements 105 interposed between the first and second raceway surfaces 103, 104 of the outer and inner members 101, 102. The inner member 102 includes a hub unit for attachment of a drive wheel. The illustrated vehicle wheel support bearing unit A constitutes a double-row angular contact ball bearing assembly. The rolling elements 105 constitute a plurality of rows of balls, with each of the rows of balls being held by a retainer 106. The outer and inner members 101, 102 define a bearing space delimited therebetween. A seal unit 107 seals an outboard end of the bearing space.

The outer member 101, which constitutes a stationary, raceway member, includes a flange 101a for attachment to an outboard housing 133b of the reduction unit C, with the outer member 101 being of one-piece construction in its entirety. The flange 101a includes bolt insertion holes 114 formed at a plurality of locations in a circumferential direction thereof. The housing 133b includes threaded bolt-holes 144 formed at locations that correspond to the bolt insertion holes 114, with the threaded bolt-holes 144 having inner periphery formed with threads. The outer member 101 can be mounted to the housing 133b by inserting and screwing attachment bolts 115 into the threaded bolt-holes 144.

The inner member 102, which constitutes a rotational, raceway member, includes an outboard segment 109 and an inboard segment 110. The outboard segment 109 includes a vehicle wheel mounting hub flange 109a. The inboard segment 110 includes an outboard portion crimpedly integrated to the inner periphery of the outboard segment 109. The illustrated rows of second raceway surfaces 104 are formed on the respective outboard and inboard segments 109, 110. The inboard segment 110 includes a through hole 111 formed at a center thereof. The hub flange 109a includes holes 117 for force-fitting hub bolts 116, which are formed at a plurality of locations in a circumferential direction thereof. The hub flange 109a of the outboard segment 109 includes a root portion, from the proximity of which a cylindrical pilot portion 113 extends for guidance of a drive wheel and brake components (not shown). The pilot portion 113 includes an inner periphery to which a cap 118 may be fitted to close the outboard end of the through hole 111.

As discussed earlier, the reduction unit C includes a cycloid reduction mechanism. As shown in Fig. 23, two curved plates 134a, 134b each having an outer shape defined by a smooth-wavelike trochoidal curve are assembled via the bearing assemblies 135 to the respective eccentric members 132a, 132b, respectively. A plurality of outer pins 136 having opposite ends supported by the housings 133a and 133b, respectively, guides the eccentric motion of the curved plates 134a, 134b from the outer-periphery side of the curved plates 134a, 134b. A plurality of inner pins 138 associated with the inboard segment 110 of the inner member 102 are engagingly inserted to a plurality of circular through holes 139 formed in the curved plates 134a, 134b. The curved plates 134a, 134b may each have an outer shape defined by a cycloidal curve. The term "cycloid reduction mechanism" used herein refers to any reduction mechanism that include outer pins 136, inner pins 138, and curved plates 134a, 134b each having an outer shape defined by a trocoidal or cycloidal curve such as those discussed earlier. The rotational input shaft 132 is splinedly connected with the rotational output shaft 124 of the drive motor unit B for integral rotation. The rotational input shaft 132 has both ends supported, respectively, by an inboard housing 133a and the inner-diametric surface of the inboard segment 110 of the inner member 102, via two corresponding bearing assemblies 140.

The rotation of the rotational output shaft 124 of the drive motor unit B such as shown in Fig. 22 results in the eccentric motion of the respective curved plates 134a, 134b such as shown in Fig, 23 that are associated with the rotational input shaft 132 which integrally rotates with the rotational output shaft 124. The eccentric motion of the respective curved plates 134a, 134b is transmitted, through the engagement between the inner pins 138 with the through holes 139, to the inner member 102 in the form of rotational movement. The rotation speed of the inner member 102 is reduced with respect to the rotation speed of the rotational output shaft 124. For example, a single stage of cycloid reduction mechanism can achieve a reduction ratio equal to or better than one tenth.

The two curved plates 134a, 134b are assembled to the corresponding eccentric members 132a, 132b of the rotational input shaft 132, with the respective phases of the curved plates 134a, 134b being displaced from each other by 180° to cancel out their eccentric motions. The eccentric members 132a, 132b are provided with a first counterweight 141 and a second counterweight 141, respectively, with the first and second counterweights 141, 141 being disposed on one side of the eccentric members 132a, 132b, to cancel out the vibrations that may be caused by the eccentric motion of the curved plates 134a, 134b. The first and second counterweights 141, 141 are positioned such that they are eccentrically displaced in a direction opposite to the direction in which the eccentric members 132a, 132b are eccentrically displaced. The outer pins 136 and the inner pins 138 are each provided with a rolling contact bearing assembly (not shown), such that the outer ring of the rolling contact bearing assembly rollingly contacts the outer peripheries of the corresponding curved plates 134a, 134b or the inner periphery of the corresponding through hole 139.

The drive motor unit B such as shown in Fig. 22 includes an IPM motor of a radial gap type (i.e., an interior permanent magnet synchronous motor) that includes a motor stator 123 fixed to a cylindrical motor housing 122 as well as a motor rotor 125 associated with the rotational input shaft 124, with the motor stator 123 and the motor rotor 125 defining a radial gap therebetween. The rotational output shaft 124 is supported at one end by the tubular portion of the inboard housing 133a of the reduction unit C via two bearing assemblies 126. The motor housing 122 includes a circumferential wall provided with a coolant passage system 145. Lubricant oil(s) or water-soluble coolant(s) flowing through the coolant passage system 145 can cool the motor stator 123.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### (Reference Numerals)

- 1:: Rotation angle detection device
- 2:: Magnetic encoder
- 2A, 2B:: Magnetic tracks
- 3:: Sensor unit
- 3A, 3B:: Magnetic sensors
- 5:: Sensor casing
- 6:: Phase difference determination unit
- 7:: Angle computation unit
- 8:: Signal output unit
- 12:: Core metal
- 12aa:: Bent portion of core metal (Magnetic spacer)
- 36:: Magnetic plate
- 42:: Spacer
- 51:: Output shaft (Rotational shaft)
- 50a:: Motor rotor
- 50b:: Motor stator

## Claims

1. A rotation angle detection device for an automotive vehicle drive motor, the device comprising:
a magnetic encoder including a plurality of respective magnetic tracks with different numbers of magnetic poles, the magnetic tracks forming coaxial rings;
a plurality of respective magnetic sensors operable to sense the magnetic fields emanating from the respective magnetic tracks, the respective magnetic sensors being configured to obtain information on a location within a magnetic pole of the respective magnetic tracks from the sensed magnetic fields;
a phase difference determination unit configured to determine a difference between the respective phases of the respective magnetic field signals generated by the respective magnetic sensors;
an angle computation unit configured to compute an absolute angle of the magnetic encoder, based on the determined difference; and
a signal output unit configured to output the computed absolute angle;
the magnetic encoder being associated with a rotational shaft of a rotor of the automotive vehicle drive motor or with a member configured to rotate integrally with the rotational shaft, for determination of a rotor angle of the automotive vehicle drive motor.

2. The rotation angle detection device as claimed in Claim 1, wherein the respective magnetic sensors include a magnetic sensor including a plurality of magnetic sensor elements operable to produce respective outputs, the magnetic sensor elements being aligned in a direction in which the magnetic poles of one of the magnetic tracks are arranged, and the magnetic sensor being configured to compute the respective outputs from the magnetic sensor elements and produce two signals representing, respectively, sine phase and cosine phase, for determination of a location within a magnetic pole.

3. The rotation angle detection device as claimed in Claim 1, wherein the magnetic sensors, the phase difference determination unit, the angle computation unit, and the signal output unit are integrated on an integrated circuit.

4. The rotation angle detection device as claimed in Claim 1, further comprising a sensor casing as well as a magnetic plate having a surface area at least larger than the magnetic sensors, wherein the sensor casing accommodates the magnetic sensors and the magnetic plate is arranged behind the magnetic sensors.

5. The rotation angle detection device as claimed in Claim 1, further comprising a magnetic spacer, wherein the magnetic tracks include neighboring magnetic tracks and the spacer is interposed between the neighboring magnetic tracks.

6. The rotation angle detection device as claimed in Claim 5, further comprising a magnetic core metal containing a single plate having a surface, wherein the magnetic poles of the respective magnetic tracks are commonly placed on the surface and the spacer includes a bent portion of the core metal.

7. The rotation angle detection device as claimed in Claim 1, wherein each of the magnetic tracks includes one of a rubber magnet or a plastic magnet.

8. The rotation angle detection device as claimed in Claim 1, wherein each of the magnetic tracks includes a visible indication indicating a specific location in the arrangement of the magnetic poles of the magnetic track.

9. The rotation angle detection device as claimed in Claim 1, wherein the signal output unit includes a signal cable of a shielded configuration.

10. The rotation angle detection device as claimed in Claim 1, wherein the magnetic encoder is associated with an inner ring of a rolling contact bearing assembly for supporting the rotational shaft of the rotor and the magnetic sensors are associated with an outer ring of the rolling contact bearing assembly.

11. The rotation angle detection device as claimed in Claim 1, wherein the automotive vehicle drive motor comprises an automotive vehicle drive motor of an in-wheel type.

12. A bearing assembly for rotatably supporting a rotor of an automotive vehicle drive motor, the bearing assembly including a rotation angle detection device as claimed in Claim 1 integrally mounted thereto.

13. The bearing assembly as claimed in Claim 12, wherein the bearing assembly includes a rotational inner ring and the inner ring includes a visible indication indicating a starting position of the magnetic encoder.
